Europäisches Patentamt

European Patent Office

Office européen des brevets

(11) Publication number: 0 380 228 A2

# EUROPEAN PATENT APPLICATION

(21) Application number: 90300452.1

(51) Int. Cl.5: C02F 1/28, C02F 1/62

(22) Date of filing: 17.01.90

(30) Priority: 25.01.89 GB 8901622

(43) Date of publication of application:
01.08.90 Bulletin 90/31

(84) Designated Contracting States:
DE FR GB IT NL

(71) Applicant: JOHNSON MATTHEY PUBLIC
LIMITED COMPANY
New Garden House 78 Hatton Garden
London, EC1N 8JP(GB)

(72) Inventor: Pratt, Allin Sydney
6 The Limes, Crowmarsh Gifford
Wallingford, Oxfordshire, OX10 8HF(GB)
Inventor: Grashoff, Gregory John
22 Crawshey Drive, Emmer Green
Reading, Berkshire, RG4 8SX(GB)
Inventor: Tregunno-Eason, Gwendoline Ann
92 Maiden Place Lower Earley
Reading, Berkshire, RG6 3HA(GB)

(74) Representative: Wishart, Ian Carmichael et al
Patents Department Johnson Matthey
Technology Centre Blounts Court Sonning
Common
Reading, Berks RG4 9NH(GB)

(54) Water treatment.

(57) Heavy metal or other toxic metal ions may be removed from dilute solution in water by contacting the water with an alginate material, eg calcium alginate beads. Metals such as lead may be substantially removed from solutions containing concentrations in the ppm or ppb range.

EP 0 380 228 A2

## WATER TREATMENT

This invention concerns water treatment. More especially, it concerns the treatment of water to remove heavy and other toxic metals from solution.

There is considerable interest in the removal of heavy and other toxic metals from water, to protect the environment in the case of run off waters, waste water, to protect health in the case of drinking water and to produce ultra-pure water, for example for use in the electronics industry. In the case of drinking water, heavy metals, especially lead, are considered undesirable by at least some authorities at levels above about 5-10 ppb. In some instances, it is desirable to recover expensive heavy metals such as the platinum group metals or gold from waste water although these are at levels not presently considered to be a toxic danger. Other examples are mentioned below.

It has been proposed to use ion-exchange resins to remove heavy metals; it has also been proposed to use microorganisms such as algae, fungi and bacteria to adsorb heavy metals on cell surfaces. It is believed that an algal biomass immobilised in a polymer has been marketed for recovery of heavy metals from waste water. (See "Recovery of Heavy Metals by Immobilized Algae", Darnell et al in "Trace Metal Removal from Aqueous Solution", Royal Society of Chemistry Special Publication No 61, 1986.)

It has also been proposed in FR 2,371,385 to flocculate suspended matter in waste water using sodium alginate, which is in solution.

It has been suggested that calcium alginate beads, when cross-linked with epichlorohydrin, yield an ion exchange material (Ferrero et al, Annali di Chinica 72, 1982) which give quantitative ion recovery of absorbed metal ions such as calcium, copper and barium after elution, and hence could be used for analytical purposes. This paper also mentions that alginic acid had been studied as an analytical ion-exchanger, but it is not believed that either alginic acid or cross-linked alginate has been commercialised as ion-exchange media.

We have now discovered that an insoluble alginate salt may be used to bind heavy and other toxic metals in water containing such metals. The present invention has particular application to dilute solutions, for example below 1000 ppm which may be met with in practice following conventional recovery/removal of metals prior to disposal. Accordingly, the present invention provides a process for the removal of heavy or other toxic metals in dilute solution in water, comprising passing the metal ions over an insoluble alginate salt material so as to bind said ions onto the alginate material. It will be readily understood that "removal" includes partial removal of metals. The alginate salt material is preferably calcium alginate gel, for example in bead or membrane form, but other alginate materials may be used, and the physical form is not critical.

Alginate is a complex substance derived from seaweed, particularly the giant kelp, and is commercially available, for example as sodium alginate or alginic acid, and calcium alginate may be prepared therefrom in manner known per se. Other metal salts may be used, providing that any ions released during the process of the invention do not pose problems due to toxicity or for other reasons. Magnesium is a favoured alternative to calcium. The alginate material may be extended or filled by admixing with an inert filler or support material such as silica, alumina, carbon or the like. It is preferred to have a relatively large surface area available in the alginate material for contact with the water, and this may be achieved, for example, by forming the alginate as fibres, films, granules or beads. An extended and high surface area form of alginate may be formed by coating a preformed fibre (eg a natural or synthetic fibre) with alginate and, if desired, chopping the coated fibre to suitable lengths.

In one embodiment of the invention, the water to be treated is passed over the insoluble alginate salt material, which is conveniently in the form of a fixed bed, for example a fixed bed of alginate beads, although other constructions of bed are possible.

In another embodiment of the invention, the metal ions in the water to be treated are mobilised by the application of an electric potential and are bound onto alginate material adjacent the cathode, eg in the form of a film, coating or sleeve. The water may be flowing, in a continuous process, or may be static, in a batch process.

Preliminary tests have shown that the process works under generally ambient conditions, although optimum temperatures and pH may be found by routine experiment for any particular raw water feed. Excessively acid or basic media are preferably avoided in order to avoid degradation of the insoluble alginate salt, and the invention offer particular advantages in the treatment of water which is approximately neutral, for example mains or drinking water.

The contaminent metals bound to the alginate material may be removed, and the alginate regenerated, by adjusting pH and calcium ion concentration, the efficiency and desirability thereof may be found by routine testing. For a small scale user of the process, it may be desirable to replace the alginate material when saturation with metals is approaching. The used material may be refined, regenerated or suitably disposed of by a larger scale operator.

The invention is believed to offer particular advantages in the removal of metals from drinking water. Principal contaminants of concern are lead and cadmium, and copper and nickel may also be considered. These metals are generally present at relatively low concentrations, which are nonetheless considered hazardous, and few if any methods exist for the simple and economic reduction of these concentrations to those considered less hazardous. Other metals which may be considered hazardous to the environment include especially silver, for example from photographic/X-ray laboratories, which generally has a deleterious effect on microorganism life such as in sewage works. Metals which it may be desirable to remove or recover from dilute solutions include gold, mercury and platinum group metals. Thus, the invention may be applied to water contaminated with up to 100 parts per million (ppm) of metals, and it is believed that advantageous effects can be obtained at levels of the order of 10 to 100 parts per billion (ppb). While the invention clearly has especial revelance to the so-called "heavy metals", the invention may also be applied to other toxic metals which may pose problems, of which aluminium may particularly be mentioned.

The invention may also be used in conjunction with an antimicrobial agent, which may be dispersed in, deposited on and/or positioned adjacent, eg in a bed upstream or downstream of the bed of alginate material. Preferred antimicrobial agents are carried on a particulate carrier which can readily be admixed with beads of the alginate material and/or used to form an adjacent bed. Suitable antimicrobial agents include silver on carbon, which is commercially available in different grades from different suppliers, but it is preferred to use silver deposited on titania or especially silver chloride deposited on titania as described in EP 251 783. In this aspect of the invention, the alginate material may additionally be combined with, by admixing with or more preferably by being positioned adjacent to, a quantity of an adsorbent for organic material. Desirably, such an adsorbent is an active carbon, and it is preferred to use active carbon carrying a deposit of silver. This embodiment of the invention is especially suitable for water treatment devices in the nature of filters for drinking water. It has been found that the use of an antimicrobial agent is useful in preventing the growth of microorganisms on filter beds of alginate material and/or carbon during a period when there is no flow of water, which could result in an undesirable concentration of microorganisms in the first water drawn through a filter after such a rest period. (It should be recognised that drinking water contains microorganisms under normal circumstances). It is desirable to prevent the multiplication of pathogenic bacteria in water filters. It has also been found that extended use of the alginate material may result in biological degradation thereof, and that the presence of the preferred silver-containing antimicrobial agent permits greatly extended life of the alginate material.

The invention also provides a water treatment apparatus, for reducing the quantity of metals in water, comprising a treatment vessel containing a quantity of alginate material in a form suitable for contact with water. The apparatus may take the form, for example, of a "filter" and comprising a filter body having an inlet and an outlet and a bed of alginate material positioned so that water passing from inlet to outlet is contacted therewith. Depending upon the concentration of the metals, and the water flow rate, the precise design may be optimised to achieve the desired reduction in metal content, by routine testing and design work. The apparatus includes embodiments in which the bed of alginate material, is admixed with or adjacent to a bed of an antimicrobial agent and/or an adsorbent for organic material.

The invention will now be described by way of example only.

## EXAMPLE 1

Calcium alginate beads were prepared by adding a 2% solution of commercial medium viscosity sodium alginate to 0.3M calcium chloride solution, dropwise from a syringe needle and pumped by a constant flow rate peristaltic pump. Instead of calcium chloride solution, a solution of another calcium salt, such as calcium nitrate, may be used. Uniform beads of calcium alginate were readily prepared. The beads were allowed to age in calcium chloride solution for 16 hours prior to washing. The beads were stored wet to avoid cracking.

10gm samples of the beads were added to 50ml sample solutions of various concentrations, and stirred. 5ml samples of the solution were removed periodically and analysed by Inductively Coupled Plasma, in comparison with the starting solution and blank samples of distilled water.

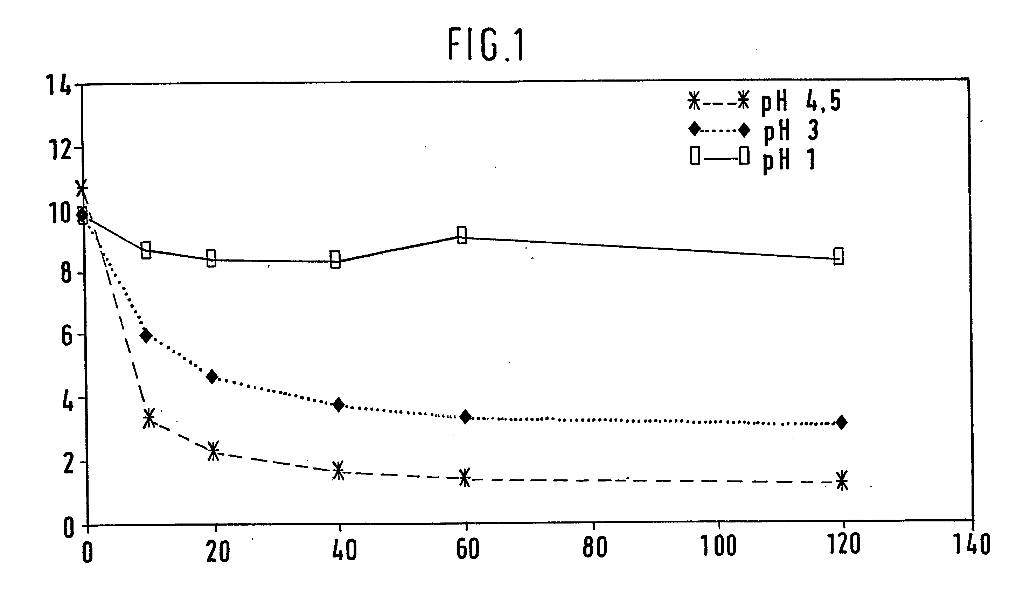

A series of test solutions containing 10ppm copper were prepared. The solution as prepared had a pH of 4.5. Two other solutions were prepared by acidifying samples of the solution by hydrochloric acid, to pH 3 and pH 1. The results are shown in graph form in Fig 1, in which the vertical axis represents copper remaining in ppm and the horizontal axis represents the exposure time in minutes, from which it can be seen that 85% removal of copper can be achieved within 40 minutes, for the stock solution. The results with the acidified solutions were less good.

## EXAMPLE 2

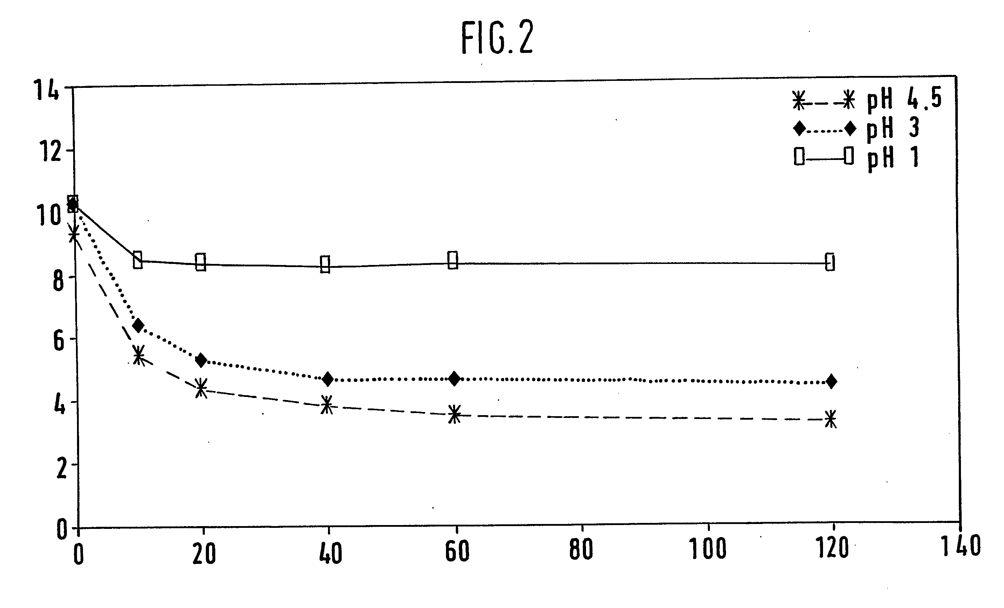

The above procedure was repeated, but using a solution of 10ppm cadmium, and the results are shown in Fig 2, in which the vertical axis represents cadmium remaining in solution, and the horizontal axis represents the exposure time in minutes.

## EXAMPLE 3

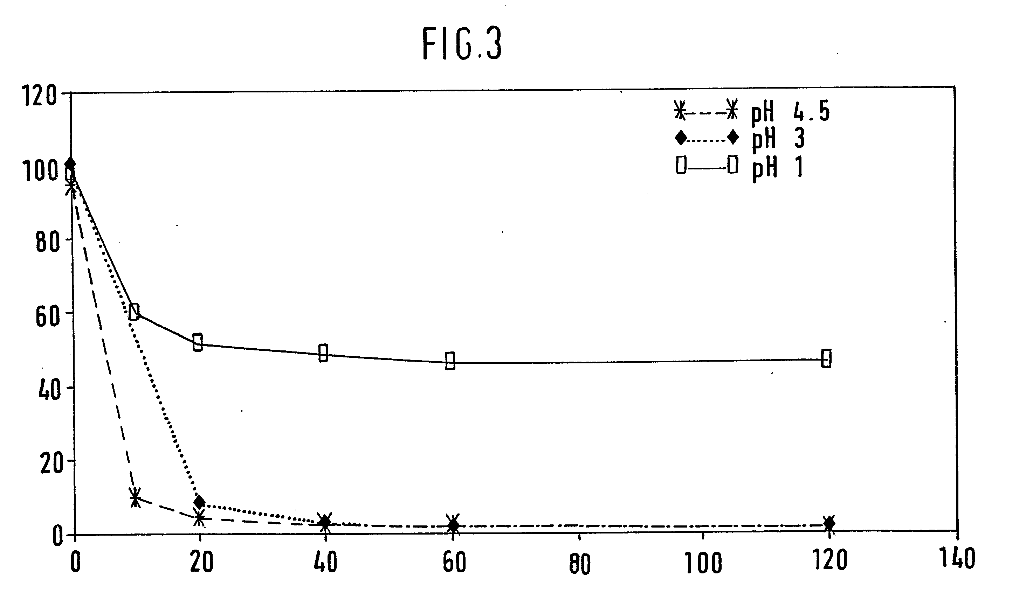

The above procedure was repeated, but using a solution of 100ppm lead, and the results are shown in Fig 3 in which the vertical axis represents the amount of lead remaining in solution in ppm, and the horizontal axis represents the exposure time in minutes. Very significant reductions of lead content are achieved within 20 minutes.

Tests were also carried out on a mixture of copper and nickel at 50ppm each, and reductions in metal content were similar to those obtained on single solutions.

## EXAMPLE 4

10g of the sodium salt of alginic acid was dispersed in 600ml distilled water at 60-70°C to give a viscous yellow liquid. This was pumped peristatically through a syringe needle so that droplets of the liquid fell onto a stirred solution of calcium chloride (0.3M, 2l) to give, immediately, insoluble beads. The beads were allowed to age in the solution for several hours before being harvested by filtration and thoroughly washed with distilled water. The weight of the thoroughly drained beads was 182g.

A 10g sample of the drained beads was stirred into a solution of lead nitrate (50ml, 50ppb lead) in distilled water. At intervals, 5 ml samples of the solution were removed for analysis for lead by carbon-furnace atomic absorption spectometry. The results are given in the table below.

| Time (mins) | Pb conc (ppb ± 1ppb) |
|---|---|
| 0 | 50 |
| 5 | 5 |
| 30 | 0 |
| 60 | 0 |

It will be seen that 90% of the lead content had been removed by the first sampling time of 5 minutes.

## EXAMPLE 5

50ml of an aqueous solution of aluminium sulphate containing 10ppm of aluminium was stirred with 50g of drained alginate beads prepared as in Example 4. Analysis of the solution showed that more than 90% of the aluminium was removed from the solution after 1 hour.

## EXAMPLE 6

4

A 50ml sample of an aqueous solution of silver nitrate containing 10ppm of silver was stirred with 50g of drained alginate beads prepared as in Example 4 for 2 hours. Analysis of the solution showed that more than 95% of the silver content had been removed from solution.

## EXAMPLE 7

Sodium alginate (5g) was emulsified with distilled water (300ml) and pumped via a syringe needle to drop into a stirred solution of 0.3 moles/l calcium chloride (1300ml) to give translucent beads of calcium alginate. The beads were washed with distilled water and formed Sample A.

The preparation of Sample A was repeated, except that the sodium alginate solid was added 0.15g of 15% AgCl deposited on titania, prepared as described in EP 251 783. White opaque beads were obtained (Sample B).

The preparation of Sample B was repeated, except that 0.33g of commercial 5% Ag on finely divided carbon powder was used in place of the AgCl on titania. Black beads were obtained (Sample C).

10g of beads from Sample A were stirred for 30 minutes with 50ml of a solution of silver nitrate containing 1.6mg of silver. The beads were recovered and washed. (Sample D).

Each of Samples B, C and D contained the same quantity of silver per unit weight of beads, and were used together with Sample A in a suspension test as described below.

5g (wet weight) of freshly prepared beads was added to 49ml sterile distilled water in a 100ml screw capped conical flask. 1ml of a suspension E. coli NCTC 10418 prepared from an overnight culture in Tryptone Soya Broth containing approximately $1 \times 10^7$ organisms/ml was added and each flask placed into a water bath at $25°C$ shaking at 150 osc/min. Samples were removed and viable counts performed at 0h and 24h.

Sampling was performed by aseptically removing 1ml and adding to 9ml sterile Thioglycollate Medium (Oxoid Ltd). Serial dilutions were performed in quarter strength Ringers' solution and 1ml aliquots were mixed with 15ml molten Tryptone Soya Agar (Oxoid Ltd) in sterile petri dishes. Plates were incubated overnight at $37°C$ and colonies counted. In addition, 5ml samples from each flask were filtered onto 0.45um gridded cellulose nitrate filters. These were then incubated on the surface of Tryptone Soya Agar plates at $37°C$ overnight.

The inactivation method was tested by adding 1g (wet weight) beads to 9ml Thioglycollate Medium and adding approximately $1 \times 10^6$ E. coli. Serial dilutions followed by pour plate enumeration (as above) revealed no significant differences between Samples B, C and D and thioglycollate medium controls.

Results.

| (a) Viable counts. | | |
|---|---|---|
| | cfu/ml | |
| | 0h | 24h |
| Untreated Beads (A) | 3.8 $10^5$ | 9 x $10^4$ |
| AgCl/TiO$_2$ (B) | 3.2 x $10^5$ | 3.8 |
| Ag/Carbon (C) | 3.4 x $10^5$ | 1.2 |
| Ag/alginate (D) | 3.2 x $10^5$ | 0.2 |
| Water only | 2.9 x $10^5$ | 2.9 x $10^5$ |

| (b) Log viable counts. | | | |
|---|---|---|---|
| | log cfu/ml | | |
| | Oh | 24h | log kill |
| Untreated Beads (A) | 5.58 | 4.95 | 0.63 |
| AgCl/TiO$_2$ (B) | 5.51 | 0.58 | 4.93 |
| Ag/Carbon (C) | 5.53 | 0.08 | 5.45 |
| Ag/alginate (D) | 5.51 | -0.7 | 6.20 |
| Water only | 5.46 | 5.46 | 0 |

In this short term test, Samples B, C and D were approximately 100,000 times more active at killing E. coli than the calcium alginate of Sample A.

## EXAMPLE 8

4g samples of Sample A to D, described in Example 7, were packed into narrow glass tubes having a bed of glass wool at the bottom. All the tubes were connected to a drinking water supply from the mains water in Oxfordshire, England. Water was allowed to flow through the tubes at 34ml/min during the working day; at all other times the flow was stopped. Samples of the water supply and the water passed from each tube were taken after 22 days after an overnight static period, but not including the first two minutes of flow from each tube.

Viable counts of colonies formed after incubation of the samples were made to access the numbers of bacteria in the water from each tube, and compared to bacteria from the water supply. The results are shown in the Table below:

TABLE

| Dilution | Incub. Temp °C | Bacterial Counts/ml (x10$^{-3}$) | | | | Supply |
|---|---|---|---|---|---|---|
| | | Sample A | B | C | D | |
| 100 | 22 | 17.7 | 5.7 | 4.3 | 5.2 | 5.4 |
| | 30 | 13.4 | 4.0 | 3.4 | 4.1 | 4.1 |

The number of bacteria from the calcium alginate beads (Sample A) were three times greater than the number of bacteria from the beads having a silver antibacterial components (Sample B, C and D) which were equivalent to the number of bacteria in the normal drinking water supply. In another test, it was observed that the beads of Sample A turned yellow and developed an odour and debris from the beads could block sintered retaining disks over several weeks. In contrast, no degradation of Sample C was observed over the same period.

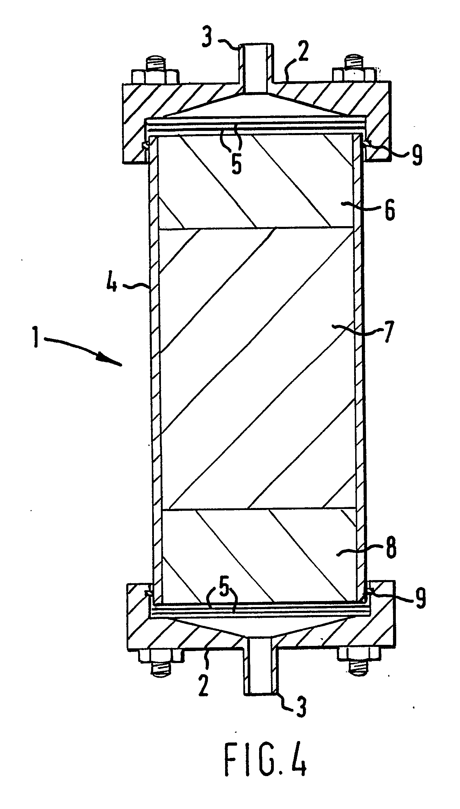

An apparatus according to the invention is illustrated in Fig 4 which is a schematic cross-section of a replaceable cartridge for drinking water supplies. The cartridge, 1, has two manifolds, 2, with inlet/outlet connection pipes, 3, connectable to the water supply system. Between the manifolds is mounted a metal or plastics tube, 4, which acts as the body of the cartridge, and coarse filter elements, for example a mesh or paper, 5, which prevent the contents of the cartridge from being displaced during handling or operation. The cartridge contains three layers, 6, 7 and 8, which may, if desired, be separated by mesh or filter paper. Layers 6 and 8 are, in this example, commercial silver on carbon granules, and central layer 7 is a mixture of calcium alginate beads as described above and silver chloride on titania as described in EP 251 783. The manifolds and tube are fixed together, for example by bolts, and O-rings, 9, are used to prevent leakage.

The cartridge shown is symmetrical and could be fitted in a water line in either orientation. If desired, a non-symmetrical arrangement of the layers, together with different connection pipes, may be used. The operation of the cartridge is as described above.

## Claims

1. A process for the removal of heavy metal or other toxic metal ions in dilute solution in water, comprising passing the water containing metal ions over an insoluble alginate salt material so as to bind said ions onto the alginate material.

2. A process according to claim 1, wherein the alginate material is in extended surface area form.

3. A process according to claim 1 or 2, wherein the alginate material is selected from calcium and magnesium alginates.

4. A process according to any one of the preceding claims, comprising also applying an electric field to mobilise the metal ions to contact the alginate material.

5. A process according to any one of the preceding claims, wherein the alginate material is in the form of a fixed bed of beads, fibres or in the form of a film.

6. A process according to any one of the preceding claims, wherein an antimicrobial agent is dispersed in, deposited on or positioned adjacent the alginate material.

7. A process according to any one of the preceding claims, wherein the water is also passed over an adsorbent for organic material.

8. An apparatus for carrying out a process according to any one of the preceding claims, comprising an inlet for water containing heavy metal or other toxic metal ions, an outlet for water having had at least a proportion of said ions removed and positioned therebetween a bed or layer of insoluble alginate salt material such that water passing through the apparatus contacts said alginate material.

9. An apparatus according to claim 1, comprising also a quantity of an antimicrobial agent dispersed in, deposited on or positioned adjacent the bed or layer of alginate material.

10. An apparatus according to claim 9, wherein the antimicrobial agent is silver or a silver salt deposited on a particulate carrier.

11. An apparatus according to claim 8, 9 or 10, comprising also a quantity of an adsorbent for organic material dispersed in or positioned adjacent the bed or layer of alginate material.

12. An apparatus according to any one of claims 8 to 11, comprising also means for applying an electric potential to mobilise metal ions to contact the alginate material.

FIG.1

FIG.2

EP 0 380 228 A2

FIG.3

EP 0 380 228 A2

FIG.4